# EUROPÄISCHE PATENTSCHRIFT

(11) **EP 2 910 333 B1**
(45) Veröffentlichungstag und Bekanntmachung des Hinweises auf die Patenterteilung: **04.05.2016**
(21) Anmeldenummer: 15160139.0
(22) Anmeldetag: 11.10.2011
(51) Int. Cl.: B24B 23/04, B24B 41/00, B25F 5/00

(54) **Handwerkzeugmaschine**
MANUAL MACHINE TOOL
MACHINE-OUTIL PORTATIVE

(30) Priorität: 14.10.2010 DE 102010042452
(43) Veröffentlichungstag der Anmeldung: 26.08.2015
(62) Teilanmeldung aus: 11767257.6
(73) Patentinhaber: Robert Bosch GmbH, 70442 Stuttgart (DE)
(72) Erfinder: Christen, Stefan, 5425 Schneisingen (CH); Mathys, Thomas, 3250 Lyss (CH)

(56) Entgegenhaltungen:
- EP-A2- 0 849 492

## Beschreibung

Die Erfindung bezieht sich auf eine Handwerkzeugmaschine, insbesondere ein Schleifgerät wie beispielsweise einen Exzenterschleifer oder einen Schwingschleifer, nach dem Oberbegriff des Anspruches 1.

### Stand der Technik

In der DE 10 2006 034 078 A1 wird eine Schleifhandwerkzeugmaschine beschrieben, die eine Vibrationsentkopplungsvorrichtung aufweist, über die der Handgriff vom Gehäuse mit der Antriebseinheit schwingungsentkoppelt ist. Der Handgriff bildet ein separat ausgebildetes Gehäuseteil, das über die Vibrationsentkopplungsvorrichtung mit dem die Antriebseinheit aufnehmenden weiteren Gehäuseteil verbunden ist. Die Antriebseinheit umfasst einen elektrischen Antriebsmotor sowie eine Übertragungseinrichtung zur Übertragung der Antriebsbewegung auf das Schleifwerkzeug. Im Betrieb der Handwerkzeugmaschine entstehen bei der Werkstückbearbeitung sowie im Antrieb Schwingungen und Vibrationen, die sich in das Gehäuse fortpflanzen, wobei über die Vibrationsentkopplungseinrichtung eine wirksame Dämpfung der Schwingungen sowie Vibrationen und eine Entkopplung im Handgriff erreicht wird.

Die Vibrationsentkopplungsvorrichtung umfasst biegeelastische Säulenelemente, die zwischen dem Handgriff und dem Gehäuseteil angeordnet sind, welches die Antriebseinheit aufnimmt. Die Vibrationsentkopplungsvorrichtung muss so ausgelegt sein, dass weder durch Materialalterung noch bei starker Belastung der Handwerkzeugmaschine ein unmittelbarer Kontakt zwischen dem die Antriebseinheit aufnehmenden Gehäuseteil und dem Handgriff auftritt.

Die EP 0 849 492 A2 zeigt ein Schleifgerät, das in einem Maschinengehäuse einen elektrischen Antriebsmotor mit einem Motorgehäuse aufweist, welches über Dämpfungselemente an der Innenseite des Maschinengehäuses abgestützt ist. Die Dämpfungselemente weisen zwei parallele, flexible Platten auf, die zwischen Endscheiben eingespannt sind.

### Offenbarung der Erfindung

Der Erfindung liegt die Aufgabe zugrunde, mit einfachen Maßnahmen eine wirksame Vibrationsentkopplung zwischen der Antriebseinheit einer Handwerkzeugmaschine und dem Handgriff sicherzustellen.

Diese Aufgabe wird erfindungsgemäß mit den Merkmalen des Anspruches 1 gelöst. Die Unteransprüche geben zweckmäßige Weiterbildungen.

Die erfindungsgemäße Handwerkzeugmaschine wird zur spanenden Bearbeitung eines Werkstückes eingesetzt. Bei der Handwerkzeugmaschine handelt es sich bevorzugt um ein Schleifgerät, insbesondere einen Exzenterschleifer oder einen Schwingschleifer. Die Handwerkzeugmaschine weist in einem Maschinengehäuse eine Antriebseinheit auf, die einen Antriebsmotor sowie eine Übertragungseinrichtung zum Antreiben eines Werkzeugs umfasst. Zur Schwingungsreduzierung ist im Maschinengehäuse ein Dämpfungselement im Übertragungsweg zwischen der Antriebseinheit und einem Gehäuseteil angeordnet.

Erfindungsgemäß ist vorgesehen, dass das Dämpfungselement unmittelbar zwischen dem Motorgehäuse des Antriebsmotors und dem Maschinengehäuse angeordnet ist und zugleich ein Trägerelement zum Halten und Abstützen des Antriebsmotors im Maschinengehäuse bildet. Dem Dämpfungselement kommen somit zwei Funktionen zu, nämlich zum einen die schwingungsreduzierende Wirkung und zum ändern eine das Motorgehäuse tragende Funktion. Auf diese Weise wird eine konstruktive Vereinfachung des Maschinengehäuses erreicht, da kein speziell zur Aufnahme des Antriebsmotors ausgelegtes Gehäuseteil erforderlich ist. Es bestehen dadurch zusätzliche Gestaltungsmöglichkeiten im Hinblick auf die Konstruktion der Handwerkzeugmaschine.

Des Weiteren ist sichergestellt, dass auch unter hoher Belastung kein direkter Kontakt zwischen dem Motorgehäuse des Antriebsmotors und dem Maschinengehäuse entsteht. Hierzu ist der Antriebsmotor vorzugsweise ausschließlich über die Dämpfungselemente im Maschinengehäuse gehalten. Erreicht werden kann dies in bevorzugter Ausführung dadurch, dass das Dämpfungselement in mindestens zwei verschiedene Richtungen Kräfte überträgt und damit auch in diese Richtungen zu einer Vibrationsentkopplung beiträgt.

Gemäß einer alternativen Ausführung kann es aber auch zweckmäßig sein, die Dämpfungselemente mit Verbindungselementen zu kombinieren, über die das Motorgehäuse mit dem Maschinengehäuse verbunden ist. Bei dieser Ausführung erfolgt die Anordnung der Verbindungs- und Dämpfungselemente vorzugsweise derart, dass in mindestens eine Richtung ausschließlich eine Verbindung über das Dämpfungselement und in einer weiteren Richtung das zusätzliche Verbindungselement wirksam ist, so dass die Vibrationsentkopplung zumindest in der Richtung erfolgt, in welcher das Dämpfungselement wirksam ist.

Als Antriebsmotor wird vorzugsweise ein Elektromotor eingesetzt. Dementsprechend handelt es sich bei dem Motorgehäuse um ein Polgehäuse, an dem ein oder mehrere Dämpfungselemente zur Abstützung gegenüber dem Maschinengehäuse angreifen. In einer weiteren vorteilhaften Ausführung kann auch ein mit Druckluft betriebener Antriebsmotor eingesetzt werden.

Gemäß zweckmäßiger weiterer Ausbildung ist vorgesehen, dass über den Umfang verteilt mehrere Dämpfungselemente zwischen dem Motorgehäuse und dem Maschinengehäuse angeordnet sind. Auf diese Weise wird eine allseitige Abstützung und wirksame Schwingungsentkopplung zwischen dem Motorgehäuse und dem Maschinengehäuse erzielt.

Gemäß einer weiteren vorteilhaften Ausführung ist vorgesehen, dass mindestens ein Dämpfungselement als ein kompakter Dämpfungsblock ausgebildet ist. Der Dämpfungsblock ist insbesondere als Mehrkantblock ausgeführt, was den Vorteil hat, dass ebene Flächen zur Abstützung gegenüber dem Motorgehäuse und/oder Maschinengehäuse gegeben sind. Aufgrund der kompakten Ausführung des Dämpfungselementes kann dieses auch hohe Kräfte übertragen und ist somit auch für den Einsatz unter hohen Belastungen geeignet.

Grundsätzlich kommen für das Dämpfungselement sowohl ebene als auch gewölbte Flächen in Betracht, über die das Dämpfungselement auf Kontakt zum Motorgehäuse und/oder Maschinengehäuse liegt.

Im Falle mehrerer Dämpfungselemente, welche das Motorgehäuse gegenüber dem Maschinengehäuse abstützen und halten, sind diese entweder als Einzelelemente ausgeführt oder zusammenhängend, insbesondere an einem verbindenden Trägerring gehalten. Der Trägerring kann um das Motorgehäuse gelegt werden, wodurch sich insbesondere bei der Montage Vorteile ergeben. Der Trägerring ist gegebenenfalls aus einem dämpfenden Material hergestellt.

Des Weiteren kann es zweckmäßig sein, mindestens ein Dämpfungselement in eine Aufnahmevorrichtung einzusetzen, die im Motorgehäuse und/oder im Maschinengehäuse angeordnet ist. Die Aufnahmevorrichtung kann sowohl für einzeln ausgeführte Dämpfungselemente als auch für über einen Trägerring miteinander verbundene Dämpfungselemente eingesetzt werden. Die Aufnahmevorrichtungen besitzen insbesondere einen an die Dämpfungselemente angepassten Grundquerschnitt mit seitlich überstehenden Wandungen, so dass zum einen eine sichere Aufnahme der Dämpfungselemente in den Aufnahmevorrichtungen gegeben und zum andern nicht nur eine Kraftübertragung in Radialrichtung zum Motorgehäuse möglich ist, sondern auch in Richtung der Längsachse bzw. in Querrichtung. Des Weiteren können die seitlich überstehenden Elemente als Montagehilfe dienen.

Um die Halterung der Dämpfungselemente zu verbessern, kann es zweckmäßig sein, zumindest eines der Dämpfungselemente mit einer Ausnehmung zu versehen, wobei die Aufnahmevorrichtung einen Zentrierstift umfasst, auf den das Dämpfungselement aufschiebbar ist. Der Zentrierstift erleichtert die Montage und ermöglicht darüber hinaus eine gesteigerte Kraftübertragung in mehrere Richtungen, also sowohl radial zur Motorlängsachse als auch in Achsrichtung bzw. in Querrichtung.

Gegebenenfalls erfolgt eine Kombination von Aufnahmevorrichtungen und Zentrierstiften, insbesondere dergestalt, dass innerhalb der Aufnahmevorrichtung ein Zentrierstift angeordnet ist, auf den das Dämpfungselement, welches mit einer Ausnehmung versehen ist, aufgeschoben werden kann.

Die Aufnahmevorrichtungen und/oder die Zentrierstifte befinden sich entweder nur am Motorgehäuse oder nur am Maschinengehäuse oder an beiden Gehäusen.

Da die Vibrationsentkopplung zwischen dem Motorgehäuse und dem Maschinengehäuse erfolgt, kann das Maschinengehäuse einschließlich Handgriff einteilig ausgeführt sein. Es ist nicht erforderlich, den Handgriff separat auszubilden und gegenüber dem zentralen Gehäuse der Handwerkzeugmaschine über schwingungsentkoppelnde Bauteile anzubinden.

Weitere Vorteile und zweckmäßige Ausführungen sind den weiteren Ansprüchen, der Figurenbeschreibung und den Zeichnungen zu entnehmen. Es zeigen:
- Fig. 1: einen Antriebsmotor als Bestandteil einer Schleifhandwerkzeugmaschine, wobei am Polgehäuse des Motors über den Umfang sowie in Achsrichtung verteilt mehrere als Blöcke ausgeführte Dämpfungselemente zur Abstützung gegenüber einem Maschinengehäuse angeordnet sind,
- Fig. 2: die als Blöcke ausgeführten Dämpfungselemente in perspektivischer Einzelansicht,
- Fig. 3: eine Fig. 1 entsprechende Darstellung, jedoch mit den Dämpfungselementen an einem verbindenden Trägerring,
- Fig. 4: der Trägerring mit den Dämpfungselementen in Einzeldarstellung,
- Fig. 5: eine Schnittdarstellung des Motorgehäuses mit an der Außenseite des Motorgehäuses angeordneten Dämpfungselementen,
- Fig. 6: das Motorgehäuse mit Aufnahmevorrichtungen, in die ein radial herausragender Zentrierstift zur Fixierung der Dämpfungselemente eingebracht ist,
- Fig. 7: das Maschinengehäuse der Schleifhandwerkzeugmaschine mit Aufnahmevorrichtungen zur Aufnahme der Dämpfungselemente,
- Fig. 8: eine ähnliche Darstellung wie Fig. 7, jedoch mit eingesetzten Dämpfungselementen, die an einem umlaufenden Trägerring gehalten sind,
- Fig. 9: die Schleifhandwerkzeugmaschine mit eingesetztem Antriebsmotor, der gegenüber dem Maschinengehäuse über die Dämpfungselemente abgestützt ist,
- Fig. 10: die Schleifhandwerkzeugmaschine in einem Horizontalschnitt.

In den Figuren sind gleiche Bauteile mit gleichen Bezugszeichen versehen.

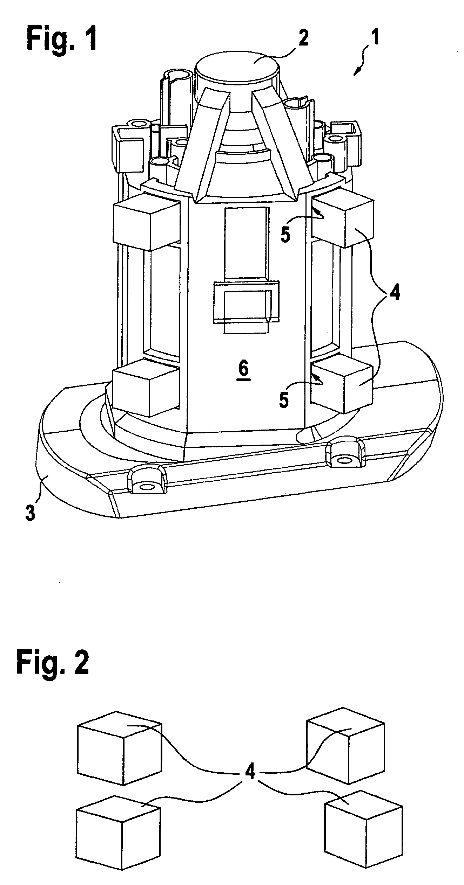

In Fig. 1 ist ein elektrischer Antriebsmotor 1 dargestellt, der zum Antreiben eines Werkzeugs beispielsweise in einer Schleifhandwerkzeugmaschine eingesetzt wird. Der elektrische Antriebsmotor 1 weist ein Motor- bzw. Polgehäuse 2 auf, das im Fußbereich mit einer Flanschgeometrie 3 verbunden ist, welche das Schleifwerkzeug umgreift. Über die Flanschgeometrie 3 wird das Motorgehäuse 2 mit einer Abdeck- bzw. Absaughaube verbunden, die als separates Bauteil ausgeführt ist. Die Flanschgeometrie 3 übernimmt zusätzliche Funktionen für die Staubabsaugung.

In die Mantelfläche 6 des Polgehäuses 2 sind Aufnahmevorrichtungen 5 eingebracht, die zur Aufnahme von Dämpfungselementen 4 dienen, über die das Polgehäuse 2 gegenüber einem Maschinengehäuse der Schleifhandwerkzeugmaschine abgestützt ist. Zweckmäßigerweise erfolgt die mechanische Kopplung zwischen dem Polgehäuse 2 und dem Maschinengehäuse ausschließlich über die Dämpfungselemente 4 an der Mantelfläche 6 des Polgehäuses 2. Die Aufnahmevorrichtungen 5 sind als Vertiefungen im Polgehäuse 2 ausgebildet, in die die quaderförmigen Dämpfungselemente 4 (Fig. 2) eingesetzt werden können. Der Querschnitt der Vertiefungen ist an den Querschnitt der Dämpfungselemente 4 angepasst, welche Quaderblöcke aus einem gummielastischen Material, beispielsweise einem PUR-Elastomer wie Cellasto bilden. Aufgrund der vertieften Ausführung der Aufnahmevorrichtungen 5 in dem Polgehäuse 2 sind die quaderförmigen Dämpfungselemente 4 sowohl in Richtung der Längsachse des Antriebsmotors als auch in Querrichtung formschlüssig aufgenommen. Des Weiteren sind die Dämpfungselemente 4 in Radialrichtung auf den Antriebsmotor 1 sicher in den Aufnahmevorrichtungen 5 gehalten.

Insgesamt sind über den Umfang sowie in Achsrichtung verteilt eine Mehrzahl einzelner quaderförmiger Dämpfungselemente 4 an der Mantelfläche 6 des Polgehäuses 2 angeordnet. Zweckmäßigerweise befinden sich an jedem axialen Ende mehrere über den Umfang verteilte Dämpfungselemente 4.

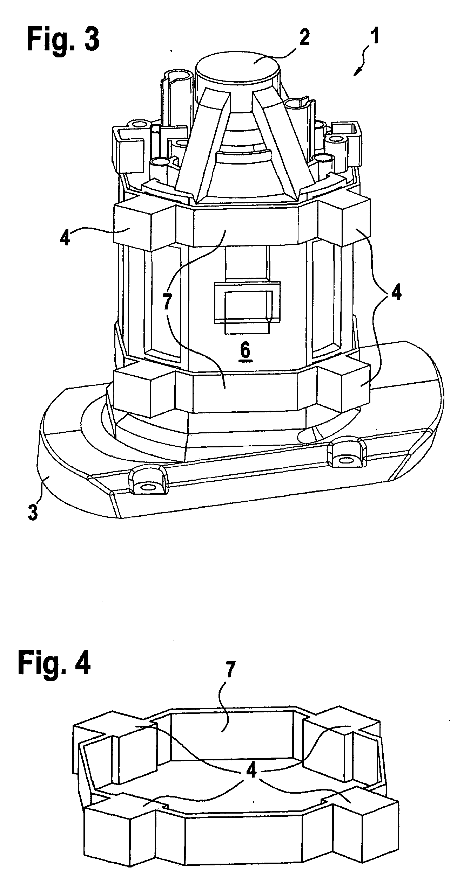

Im Ausführungsbeispiel gemäß den Fig. 3 und 4 sind die quader- bzw. blockförmigen Dämpfungselemente 4 an einem Trägerring 7 gehalten. Der Trägerring 7 mit den Dämpfungselementen 4 wird um den Umfang des Polgehäuses 2 gelegt. Am Trägerring 7 sind eine Mehrzahl von Dämpfungselementen 4 gehalten, im Ausführungsbeispiel befinden sich vier Dämpfungselemente 4 an dem Trägerring 7. Aufgrund der manschettenartigen Ausführung von Trägerring 7 und Dämpfungselement 4 kann auf Aufnahmevorrichtungen 5 im Polgehäuse 2 verzichtet werden. Der Trägerring 7 und das Dämpfungselement 4 können einteilig ausgeführt sein und bestehen in dieser Ausführung aus dem gleichen Material. Grundsätzlich möglich ist aber auch eine Ausführung aus unterschiedlichen Materialien, wobei in diesem Fall die Dämpfungselemente 4 beispielsweise an den Trägerring 7 angespritzt sind.

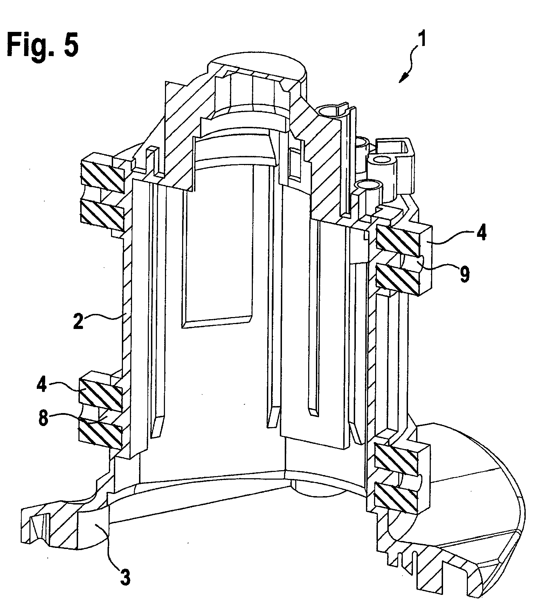

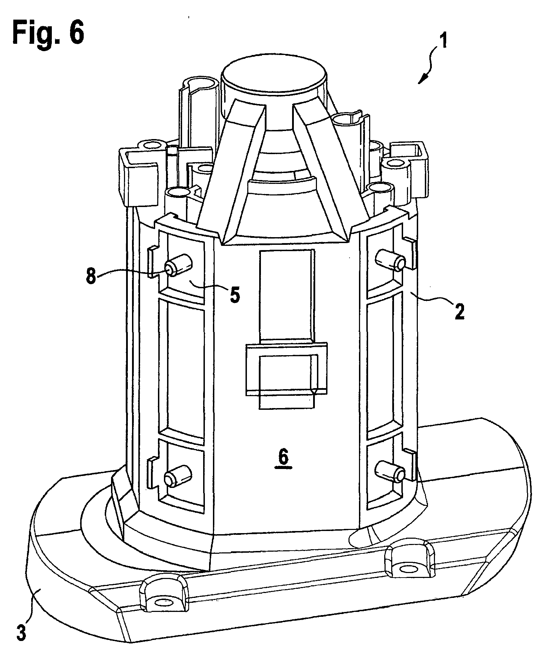

Im Ausführungsbeispiel gemäß den Fig. 5 und 6 sind in die Mantelfläche 6 des Polgehäuses 2 des elektrischen Antriebsmotors 1 Aufnahmevorrichtungen 5 eingebracht, die zur Aufnahme der blockförmigen Dämpfungselemente 4 dienen. In jeder Aufnahmevorrichtung 5 befindet sich ein einteilig mit dem Polgehäuse 2 ausgebildeter Zentrierstift 8, der radial herausragt.

Jedes Dämpfungselement 4 besitzt eine zentrale Ausnehmung 9, mit der das Dämpfungselement auf den Zentrierstift 8 aufgeschoben wird. Damit besteht nicht nur eine formschlüssige Aufnahme der Dämpfungselemente 4 innerhalb der Aufnahmevorrichtungen 5, welche als Vertiefung in der Mantelfläche 6 ausgeführt sind, sondern zusätzlich eine Sicherung der Dämpfungselemente 4 über den Zentrierstift 8.

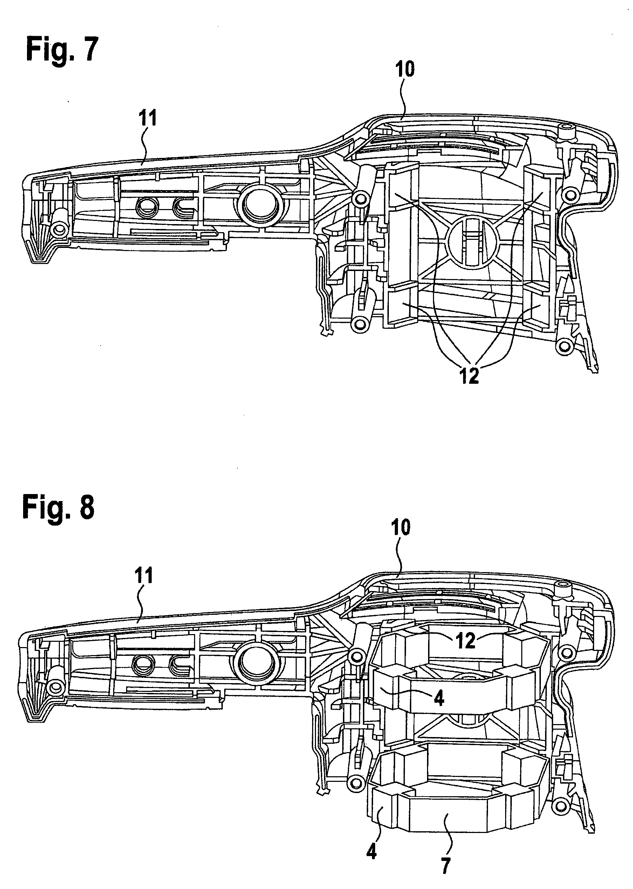

In den Fig. 7 und 8 ist das Maschinengehäuse 10 dargestellt, in das der elektrische Antriebsmotor eingesetzt wird. Einteilig mit dem Maschinengehäuse 10 ist der Handgriff 11 ausgeführt, über den die Schleifhandwerkzeugmaschine zu halten und zu führen ist. Auf der Innenseite des Maschinengehäuses 10 befinden sich Aufnahmevorrichtungen 12 zur Aufnahme der Dämpfungselemente 4. Die Aufnahmevorrichtungen 12 sind grundsätzlich in gleicher Weise aufgebaut wie die Aufnahmevorrichtungen 5 an der Mantelfläche des Polgehäuses. Die Aufnahmevorrichtungen 12 sind als Vertiefungen ausgeführt und dienen zur formschlüssigen Sicherung der Dämpfungselemente am Maschinengehäuse 10. Möglich ist aber auch die umgekehrte Ausführung, bei der die Entkoppelungselemente Vertiefungen aufweisen und das Gehäuse eine erhabene Gegengeonetrie.

Wie Fig. 8 zu entnehmen, sind die Dämpfungselemente 4 am Trägerring 7 gehalten und ragen mit ihrem radial äußeren Teil in die Vertiefungen der Aufnahmevorrichtungen 12 im Maschinengehäuse 10 ein. Mit ihrem radial innen liegenden Teil ragen die Dämpfungselemente 4 in entsprechender Weise in die Aufnahmevorrichtungen 5 in der Mantelfläche 6 des Polgehäuses ein, so wie dies beispielsweise in den Fig. 1 und 3 dargestellt ist.

In den Fig. 7 und 8 ist eine Gehäusehalbschale des Maschinengehäuses dargestellt. Das Maschinengehäuse setzt sich im fertig montierten Zustand aus zwei zusammenzufügenden Gehäusehalbschalen zusammen.

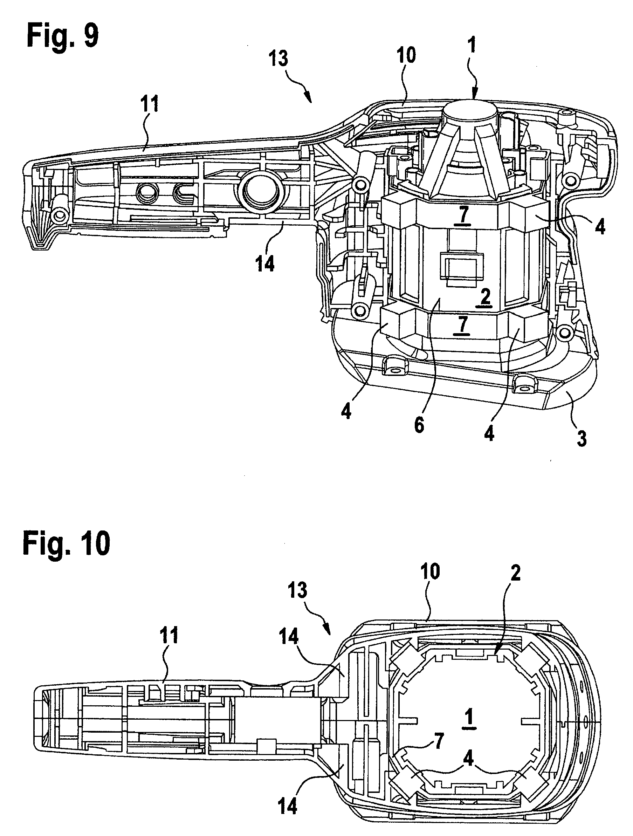

In den Fig. 9 und 10 ist die Schleifhandwerkzeugmaschine 13 mit in das Maschinengehäuse 10 integriertem Antriebsmotor 1 dargestellt. In Fig. 9 ist lediglich eine Gehäusehalbschale 14 dargestellt, wohingegen in Fig. 10 beide Gehäusehalbschalen 14 zu dem Maschinengehäuse 10 zusammengesetzt sind. Die Dämpfungselemente 4 sind wie beim vorhergehenden Ausführungsbeispiel am Trägerring 7 gehalten und um die Mantelfläche 6 des Polgehäuses 2 gelegt. Der Antriebsmotor 1 ist ausschließlich über die Dämpfungselemente 4 im Maschinengehäuse 10 gehalten.

## Patentansprüche

1. Handwerkzeugmaschine, insbesondere Schleifgerät wie beispielsweise Exzenterschleifer oder Schwingschleifer, mit einem in einem Maschinengehäuse (10) gehaltenen Antriebsmotor (1) zum Antreiben eines Werkzeugs und mit zumindest einem im Maschinengehäuse (10) aufgenommenen Dämpfungselement (4) zur Schwingungsreduzierung, wobei das mindestens eine Dämpfungselement (4) zwischen dem Motorgehäuse (2) des Antriebsmotors (1) und dem Maschinengehäuse (10) angeordnet ist und ein Trägerelement zum Halten und Abstützen des Antriebsmotors (1) am Maschinengehäuse (10) bildet, **dadurch gekennzeichnet, dass** das mindestens eine Dämpfungselement (4) eine Ausnehmung (9) aufweist, über die das Dämpfungselement (4) auf einen Zentrierstift (8) aufschiebbar ist, wobei der Zentrierstift (8) nur am Maschinengehäuse (10) angeordnet ist.

2. Handwerkzeugmaschine nach Anspruch 1, **dadurch gekennzeichnet, dass** das zumindest eine Dämpfungselement (4) zumindest eine Vertiefung und das Maschinengehäuse (10) eine erhabene Gegengeometrie aufweist.

3. Handwerkzeugmaschine nach einem der vorhergehenden Ansprüche, **dadurch gekennzeichnet, dass** das mindestens eine Dämpfungselement (4) in einer Aufnahmevorrichtung (5) im Motorgehäuse (2) aufgenommen ist.

4. Handwerkzeugmaschine nach Anspruch 3, **dadurch gekennzeichnet, dass** die Aufnahmevorrichtung (5) einen an das Dämpfungselement (4) angepassten Grundquerschnitt mit seitlich überstehenden Wandungen aufweist.

5. Handwerkzeugmaschine nach Anspruch 3 oder 4, **dadurch gekennzeichnet, dass** die Aufnahmevorrichtung (5) als Vertiefung ausgebildet ist, in die das zumindest eine Dämpfungselement (4) eingesetzt ist, wobei insbesondere der Querschnitt der Vertiefung an den Querschnitt des zumindest einen Dämpfungselements angepasst ist.

6. Handwerkzeugmaschine nach einem der Ansprüche 3 bis 5, **dadurch gekennzeichnet, dass** die Aufnahmevorrichtung (5) das zumindest eine Dämpfungselement (4) sowohl in Richtung der Längsachse des Antriebsmotors (1) als auch in Querrichtung formschlüssig aufnimmt.

7. Handwerkzeugmaschine nach einem der vorhergehenden Ansprüche, **dadurch gekennzeichnet, dass** der Antriebsmotor (1) ausschließlich über Dämpfungselemente (4) im Maschinengehäuse (10) gehalten ist.

8. Handwerkzeugmaschine nach einem der vorhergehenden Ansprüche, **dadurch gekennzeichnet, dass** das mindestens eine Dämpfungselement (4) ebene oder gewölbte Flächen aufweist, über die das Dämpfungselement (4) in Kontakt zum Motorgehäuse (2) und/oder Maschinengehäuse (10) liegt.

9. Handwerkzeugmaschine nach einem der vorhergehenden Ansprüche, **dadurch gekennzeichnet, dass** das mindestens eine Dämpfungselement (4) mit gewölbten Flächen auf Kontakt zum Motorgehäuse (2) und Maschinengehäuse (10) liegt.

10. Handwerkzeugmaschine nach einem der vorhergehenden Ansprüche, **dadurch gekennzeichnet, dass** das mindestens eine Dämpfungselement (4) als kompakter Dämpfungsblock ausgebildet ist.

11. Handwerkzeugmaschine nach einem der vorhergehenden Ansprüche, **dadurch gekennzeichnet, dass** über das mindestens eine Dämpfungselement (4) eine Vibrationsentkopplung in mindestens zwei verschiedene Richtungen, und insbesondere eine Kraftübertragung in Radial-, Längsachs- und Querrichtung zwischen Maschinengehäuse (10) und Motorgehäuse (2), gegeben ist.

12. Handwerkzeugmaschine nach einem der vorhergehenden Ansprüche, **dadurch gekennzeichnet, dass** das mindestens eine Dämpfungselement (4) aus einem gummielastischen Material besteht.

13. Handwerkzeugmaschine nach einem der vorhergehenden Ansprüche, **dadurch gekennzeichnet, dass** das Maschinengehäuse (10) einschließlich Handgriff (11) einteilig ausgeführt ist, oder im fertig montierten Zustand aus zwei zusammengefügten Gehäusehalbschalen (14) gebildet ist.

## Claims

1. Hand-held power tool, in particular a sanding appliance such as, for example, a random-orbit sander or an oscillating sander, having a drive motor (1), held in a machine casing (10), for driving a tool, and having at least one damping element (4), received in the machine casing (10), for reducing oscillations, at least one damping element (4) being disposed between the motor casing (2) of the drive motor (1) and the machine casing (10) and constituting a carrier element for holding and supporting the drive motor (1) in the machine casing (10), **characterized in that** the at least one damping element (4) has a recess (9), by means of which the damping element (4) can be slid on to a centering pin (8), the centering pin (8) being located only on the machine casing (10).

2. Hand-held power tool according to Claim 1, **characterized in that** the at least one damping element (4) has at least one cavity and the machine casing (10) has a convex geometry.

3. Hand-held power tool according to any one of the preceding claims, **characterized in that** the at least one damping element (4) is received in a receiving device (5) in the motor casing (2).

4. Hand-held power tool according to Claim 3, **characterized in that** the receiving device (5) has a base cross section that is matched to the damping element (4) and with laterally projecting walls.

5. Hand-held power tool according to Claim 3 or 4, **characterized in that** the receiving device (5) is realized as a cavity, into which the at least one damping element (4) is inserted, in particular the cross section of the cavity being matched to the cross section of the at least one damping element.

6. Hand-held power tool according to any one of Claims 3 to 5, **characterized in that** the receiving device (5) receives the at least one damping element (4) in a form-fitting manner, both in the direction of the longitudinal axis of the drive motor (1) and the transverse direction.

7. Hand-held power tool according to any one of the preceding claims, **characterized in that** the drive motor (1) is held exclusively by means of damping elements (4) in the machine casing (10).

8. Hand-held power tool according to any one of the preceding claims, **characterized in that** the at least one damping element (4) has flat or curved surfaces, via which the damping element (4) is in contact with the motor casing (2) and/or machine casing (10).

9. Hand-held power tool according to any one of the preceding claims, **characterized in that** the at least one damping element (4) with curved surfaces is in bearing contact with the motor casing (2) and machine casing (10).

10. Hand-held power tool according to any one of the preceding claims, **characterized in that** the at least one damping element (4) is realized as a compact damping block.

11. Hand-held power tool according to any one of the preceding claims, **characterized in that** there is vibration decoupling in at least two different directions via the at least one damping element (4), and in particular there is transmission of force in the radial direction, the direction of the longitudinal axis and the transverse direction between the machine casing (10) and motor casing (2).

12. Hand-held power tool according to any one of the preceding claims, **characterized in that** the at least one damping element (4) is composed of a rubber-elastic material.

13. Hand-held power tool according to any one of the preceding claims, **characterized in that** the machine casing (10) is realized as a single piece that includes the handle (11), or when in the fully assembled state is formed from two casing half-shells (14), which are joined together.

## Revendications

1. Machine-outil à main, en particulier ponceuse, par exemple ponceuse excentrique ou ponceuse orbitale, comprenant un moteur d'entraînement (1) fixé dans un boîtier de machine (10) pour entraîner un outil et au moins un élément d'amortissement (4) logé dans le boîtier de machine (10) pour réduire les vibrations, l'au moins un élément d'amortissement (4) étant disposé entre le boîtier de moteur (2) du moteur d'entraînement (1) et le boîtier de machine (10) et formant un élément de support pour fixer et supporter le moteur d'entraînement (1) au niveau du boîtier de machine (10), **caractérisée en ce que** l'au moins un élément d'amortissement (4) présente un évidement (9) par le biais duquel l'élément d'amortissement (4) peut être poussé sur une goupille de centrage (8), la goupille de centrage (8) étant disposée seulement sur le boîtier de machine (10).

2. Machine-outil à main selon la revendication 1, **caractérisée en ce que** l'au moins un élément d'amortissement (4) présente au moins un renfoncement et le boîtier de machine (10) présente une géométrie conjuguée rehaussée.

3. Machine-outil à main selon l'une quelconque des revendications précédentes, **caractérisée en ce que** l'au moins un élément d'amortissement (4) est logé dans un dispositif de logement (5) dans le boîtier de moteur (2).

4. Machine-outil à main selon la revendication 3, **caractérisée en ce que** le dispositif de logement (5) présente une section transversale de base adaptée à l'élément d'amortissement (4), avec des parois dépassant latéralement.

5. Machine-outil à main selon la revendication 3 ou 4, **caractérisée en ce que** le dispositif de logement (5) est réalisé sous forme de renfoncement dans lequel est inséré l'au moins un élément d'amortissement (4), la section transversale du renfoncement étant notamment adaptée à la section transversale de l'au moins un élément d'amortissement.

6. Machine-outil à main selon l'une quelconque des revendications 3 à 5, **caractérisée en ce que** le dispositif de logement (5) reçoit par engagement par correspondance de formes l'au moins un élément d'amortissement (4) à la fois dans la direction de l'axe longitudinal du moteur d'entraînement (1) et dans la direction transversale.

7. Machine-outil à main selon l'une quelconque des revendications précédentes, **caractérisée en ce que** le moteur d'entraînement (1) est fixé exclusivement par le biais d'éléments d'amortissement (4) dans le boîtier de machine (10).

8. Machine-outil à main selon l'une quelconque des revendications précédentes, **caractérisée en ce que** l'au moins un élément d'amortissement (4) présente des surfaces planes ou cintrées, par le biais desquelles l'élément d'amortissement (4) est en contact avec le boîtier de moteur (2) et/ou le boîtier de machine (10).

9. Machine-outil à main selon l'une quelconque des revendications précédentes, **caractérisée en ce que** l'au moins un élément d'amortissement (4) est situé avec des surfaces courbes en contact avec le boîtier de moteur (2) et le boîtier de machine (10).

10. Machine-outil à main selon l'une quelconque des revendications précédentes, **caractérisée en ce que** l'au moins un élément d'amortissement (4) est réalisé sous forme de bloc d'amortissement compact.

11. Machine-outil à main selon l'une quelconque des revendications précédentes, **caractérisée en ce qu'**un désaccouplement des vibrations dans au moins deux directions différentes, et notamment un transfert de force dans la direction radiale, la direction de l'axe longitudinal et la direction transversale entre le boîtier de machine (10) et le boîtier de moteur (2) est réalisé par le biais de l'au moins un élément d'amortissement (4).

12. Machine-outil à main selon l'une quelconque des revendications précédentes, **caractérisée en ce que** l'au moins un élément d'amortissement (4) se compose d'un matériau ayant l'élasticité du caoutchouc.

13. Machine-outil à main selon l'une quelconque des revendications précédentes, **caractérisée en ce que** le boîtier de machine (10) y compris la poignée (11) est réalisé d'une seule pièce ou, dans l'état monté fini, se compose de deux demi-coques de boîtier assemblées (14).
